**Europäisches Patentamt**

**European Patent Office**

**Office européen des brevets**

(11) Veröffentlichungsnummer: **0 163 918**
A1

(12) **EUROPÄISCHE PATENTANMELDUNG**

(21) Anmeldenummer: 85105084.9

(22) Anmeldetag: 26.04.85

(51) Int. Cl.⁴: **B 27 B 19/00,** B 23 D 51/02

(30) Priorität: 27.04.84 DE 3415796

(43) Veröffentlichungstag der Anmeldung: **11.12.85**
**Patentblatt 85/50**

(84) Benannte Vertragsstaaten: **AT CH DE FR GB IT LI NL SE**

(71) Anmelder: **Becher, Reinhard, Engelbergstrasse 42,**
**D-7000 Stuttgart 31 (DE)**

(72) Erfinder: **Becher, Reinhard, Engelbergstrasse 42,**
**D-7000 Stuttgart 31 (DE)**

(54) **Stichsägetisch und Frästisch.**

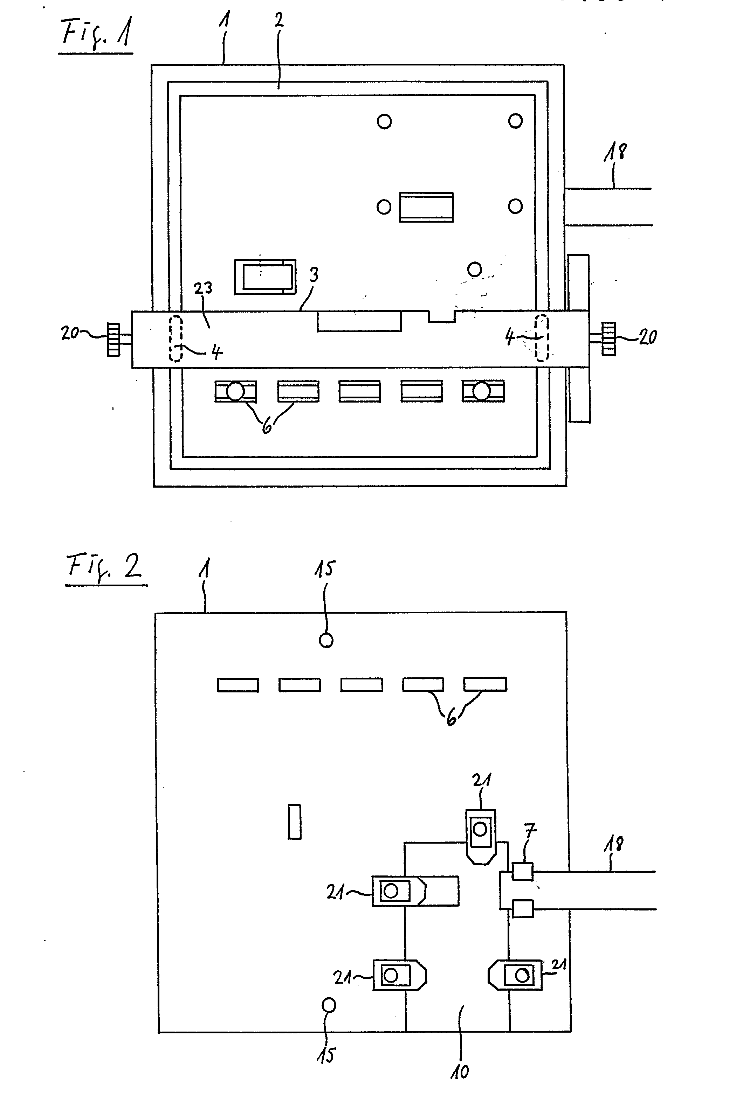

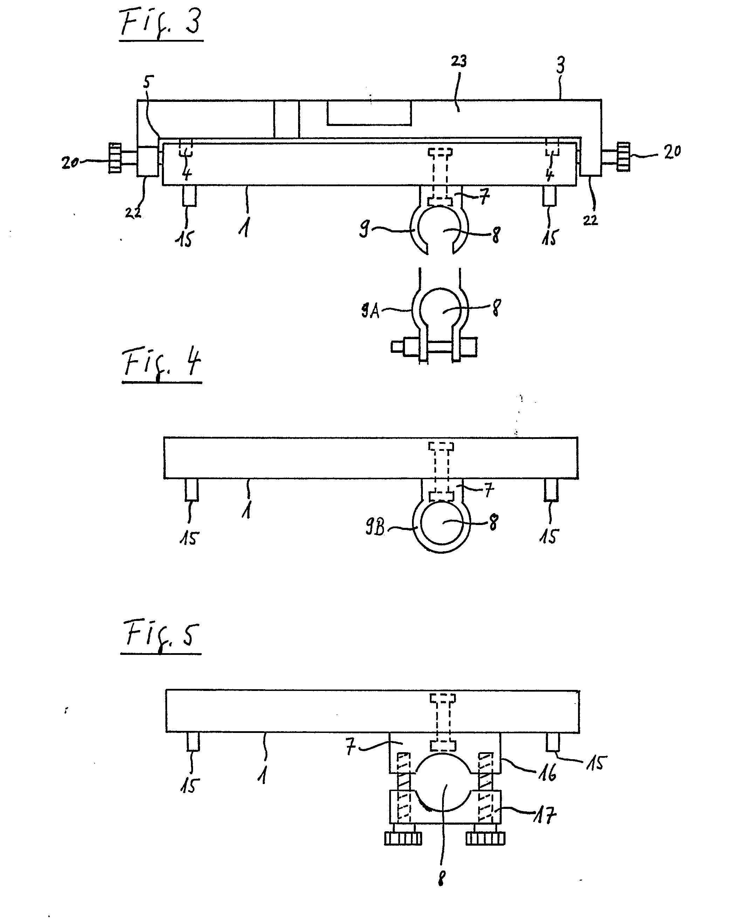

㊐ Figur 1 zeigt einen Stichsägetisch und Frästisch zum stationären Gebrauch einer Stichsäge und zum Montieren auf die Grundplatte eines Bohrständers. Die Tischplatte (1) wird mit einer Schraubzwinge an einem Werktisch befestigt. Ein u-förmiger Anschlag (3) übergreift die Tischplatte (1) und wird mittels zweier Stege (4) am Mittelschenkel (23) in einer umlaufenden Nut (2) in der Oberseite der Tischplatte (1) geführt. An der Unterseite der Tischplatte (1) befindet sich eine Vorrichtung, in welche der Schlauch eines Staubsaugers eingeklemmt werden kann.

# Stichsägetisch und Frästisch

Die Erfindung betrifft eine Tischplatte, die mittels einer Schraubzwinge an einem Werktisch befestigbar und zum stationären Einsatz einer Stichsäge geeignet ist und die weiter auf alle Bohrständergrundplatten montierbar ist und so als Frästisch verwendet werden kann.

Es sind verschiedene Sägetische zum stationären Einsatz von Stichsägen bekannt. Auch gibt es bereits Frästische zur Montage auf Bohrständergrundplatten. Allerdings gibt es keinen Tisch, der für beide Zwecke gleichermaßen geeignet ist. Weiter besitzt kein Sägetisch oder Frästisch einen Anschlag, der sowohl als Parallel- als auch als Winkelanschlag verwendet werden kann. Aus der deutschen Offenlegungsschrift DE 30 39 459 ist ein Stichsägetisch bekannt, der einen Anschluß zur Staubabsaugung durch einen Staubsauger aufweist. Diese Staubabsaugung befindet sich aber oberhalb des Stichsägetisches. Wenn jedoch die Stichsäge von unten eingesetzt ist, muß die Staubabsaugung hauptsächlich von unten erfolgen, da sonst Staub in das Maschineninnere gelangt und die Stichsäge zu sehr verschmutzt und dadurch unbrauchbar wird.

Hier will die Erfindung Abhilfe schaffen. Die Erfindung, wie sie in den Ansprüchen gekennzeichnet ist, löst die Aufgabe, eine Tischplatte zu schaffen, die an einem Werktisch befestigt werden kann und die sowohl zum stationären Einsatz jeder Stichsäge als auch zum Aufmontieren auf alle Bohrständergrundplatten geeignet ist, die einen Anschlag aufweist, der an allen Tischplattenseiten führbar und als Parallel- und Winkelanschlag verwendbar ist und die mit einer Vorrichtung ausgestattet ist, die den Anschluß eines Staubsaugerschlauches unterhalb der Tischplatte ermöglicht.

Die durch die Erfindung erreichten Vorteile sind im wesentlichen darin zu sehen, daß durch den Parallel- und Winkelanschlag der Anwendungsbereich eines Stichsägetisches und Frästisches wesentlich erweitert wird, daß durch die Doppelfunktion als Stichsägetisch und Frästisch und durch die Verwendung nur eines Anschlages als Parallel- und Winkelanschlag Kosten gespart werden, und daß durch die Staubabsaugung unterhalb der Ti platte die Stichsäge geschont wird.

Im folgenden wird die Erfindung anhand von Zeichnungen näher erläutert. Es zeigt

Figur 1 die Sicht von oben auf die Tischplatte mit eingesetztem Anschlag,

Figur 2 die Sicht der Tischplatte von unten,

Figur 3 die Tischplatte von der Seite mit eingesetztem Anschlag und der Vorrichtung zur Aufnahme des Staubsaugerschlauches in der Ausführung, bei welcher der Mantel der Durchbrechung geschlitzt ist,

Figur 4 die Tischplatte von der Seite mit der Vorrichtung zur Aufnahme des Staubsaugerschlauches in der Ausführung, bei welcher der Mantel der Durchbrechung rundum geschlossen ist,

Figur 5 die Tischplatte von der Seite mit der Vorrichtung zur Aufnahme des Staubsaugerschlauches in der Ausführung, bei welcher die Vorrichtung aus zwei Teilen besteht.

In den Figuren ist der Stichsägetisch und Frästisch dargestellt, welcher in seinem grundsätzlichen Aufbau aus einer quadratischen, an Ober- und Unterseite ebenen Tischplatte besteht, in deren Oberseite eine umlaufende Nut (2) eingelassen ist, deren Abstand zur Plattenaußenkante an allen vier Seiten gleich ist. Ein Anschlag (3) übergreift die Tischplatte (1) u-förmig
und weist am Mittelschenkel (23) zwei nach unten
hervorstehende Stege (4) auf, die in die Nut (2)
der Tischplatte (1) eingreifen.

Parallel zu einer Außenkante der Tischplatte (1) sind
mehrere rechteckige Durchbrüche (6) angeordnet, die
sich nach unten verjüngen. An der Tischplattenunterseite ist eine Vorrichtung (7) angeschraubt, die
vertikal zur Tischplatte (1) verläuft und parallel
zur Tischplatte (1) einen Durchbruch (8) aufweist,
der konisch verläuft und dessen Mantel (9, 9A, 9B)
entweder rundum geschlossen oder aufgeschlitzt ist.
Diese Vorrichtung (7) kann auch aus zwei Teilen
(16 + 17) bestehen, die zusammengeschraubt sind.

Der Anschlag (3) wird durch die Stege (4) in der Nut
(2) der Tischplatte (1) geführt und kann mit zwei
Feststellschrauben (20) die durch die äußeren
Schenkel (22) des Anschlages (3) führen an den
Stirnseiten der Tischplatte (1) festgeklemmt werden.
Da die Nut (2) an allen Seiten denselben Abstand
zur Außenkante aufweist, kann der Anschlag (3) an
allen Tischplattenseiten geführt werden. Da die
Tischplatte (1) auch an der Unterseite eben ist,
kann sie unter Verwendung der parallel zur Außenkante verlaufenden rechteckigen Durchbrüche (6)
mit Schrauben an jede Bohrständergrundplatte
montiert werden. Da die Nuten der Bohrständergrundplatten verschieden ausgebildet sind ist es oft
notwendig, die Tischplatte (1) um 90° oder 180°
gedreht zu montieren. Deshalb ist es auch hier
wichtig, daß der Anschlag (3) an allen vier Seiten
der Tischplatte (1) geführt werden kann. In die

- 4 -

0163918

von der Tischplattenunterseite abstehende Vorrichtung (7) kann der Staubsaugerschlauch (18) eingesteckt werden und den unten austretenden Staub absaugen.

Die Tischplattenunterseite weist ausgehend von einer Außenkante eine Aussparung (10) auf, von der mindestens eine Längskante parallel zu einer Plattenaußenkante verläuft. Hier wird die Stichsäge so eingesetzt, daß deren Grundplatte an der parallel zur Außenkante verlaufenden Kante anliegt. Dadurch wird gewährleistet, daß das Sägeblatt parallel zur Außenkante der Tischplatte (1) zu liegen kommt. Die Grundplatte der Stichsäge wird mittels verschiebbaren Klammern (21) festgeklemmt.

In die Unterseite der Tischplatte (1) können parallel zu einer Außenkante zwei Zapfen (15) eingesteckt werden. Diese dienen als Anschlag am Werktisch.

0163918

Patentansprüche

1. Stichsägetisch und Frästisch mit Parallelanschlag, Winkelanschlag und Vorrichtung zum Anschluß eines Staubsaugers, der mittels einer Schraubzwinge an einem Werktisch und mittels Schrauben auf einer Bohrständergrundplatte befestigbar ist, dadurch gekennzeichnet, daß er aus einer quadratischen, an Ober- und Unterseite ebenen Tischplatte (1) besteht, in deren Oberseite eine umlaufende Nut (2) eingelassen ist die an allen vier Seiten denselben Abstand zur Außenkante aufweist, daß diese Tischplatte (1) von einem u-förmigen Anschlag (3) übergriffen wird dessen Mittelschenkel zwei nach unten hervorstehende Stege (4) aufweist die in die Nut (2) der Tischplatte (1) eingreifen und den Anschlag führen, daß parallel zu einer Außenkante der Tischplatte (1) mehrere Durchbrüche (6) angeordnet sind und daß an der Unterseite der Tischplatte (1) eine Vorrichtung (7) angeschraubt ist die parallel zur Tischplatte (1) einen Durchbruch (8) aufweist der konisch verläuft und dessen Mantel (9, 9B) rundum geschlossen oder aufgeschlitzt ist.

2. Stichsägetisch und Frästisch nach Anspruch 1, bei dem die Unterseite der Tischplatte (1) ausgehend von einer Außenkante eine Aussparung (10) aufweist von der mindestens eine Längskante parallel zu einer Außenkante der Tischplatte (1) verläuft.

3. Stichsägetisch und Frästisch nach den Ansprüchen 1 und 2, bei dem in die Unterseite der Tischplatte (1) parallel zu einer Außenkante zwei nach unten hervorstehende Zapfen (15) einsteckbar sind.

4. Stichsägetisch und Frästisch nach den Ansprüchen 1 bis 3, bei dem die den Staubsaugerschlauch aufnehmende Vorrichtung (7) so ausgebildet ist, daß der ufgeschlitzte Mantel (9A) des Durchbruches (8) mittels einer Schraube zusammengeklemmt wird.

5. Stichsägetisch und Frästisch nach den Ansprüchen 1 bis 4, bei dem die den Staubsaugerschlauch (18) aufnehmende Vorrichtung (7) aus zwei Teilen besteht die zusammenschraubbar sind und der Staubsaugerschlauch dazwischen geklemmt wird.

6. Stichsägetisch und Frästisch nach den Ansprüchen 1 bis 5, bei dem der die Tischplatte (1) übergreifende u-förmige Anschlag (3) an seinen Außenschenkeln (22) mit je einer Schraube (20) versehen ist die parallel zum Mittelschenkel (23) verläuft.

Fig. 1

Fig. 2

Fig. 3

Fig. 4

Fig. 5

**Europäisches Patentamt**

**EUROPÄISCHER RECHERCHENBERICHT**

0163918

Nummer der Anmeldung

## EINSCHLÄGIGE DOKUMENTE

EP 85105084.9

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | <u>DE - A1 - 3 039 459</u> (BOSCH)<br>* Fig. 2 *<br>-- | 4,5,6 | B 27 B 19/00<br>B 23 D 51/02 |
| A | <u>DE - A1 - 2 558 321</u> (LICENTIA)<br>* Fig. 1,2 *<br>---- | 1,2 | |

RECHERCHIERTE SACHGEBIETE (Int. Cl.4)

B 27 B

B 27 G

B 23 D

Der vorliegende Recherchenbericht wurde für alle Patentansprüche erstellt.

| Recherchenort | Abschlußdatum der Recherche | Prüfer |
|---|---|---|
| WIEN | 02-07-1985 | TRATTNER |